# DEMANDE DE BREVET EUROPEEN

(11) **EP 4 261 792 A1**
(43) Date de publication de la demande: **18.10.2023**
(21) Numéro de dépôt: 23166393.1
(22) Date de dépôt: 03.04.2023
(51) Int. Cl.: G06V 20/54, G06T 7/00, G06V 10/25, G06V 10/75, G06V 10/74, G06V 10/62

(54) **PROCÉDÉ DE DÉTERMINATION D'UNE BOÎTE ENGLOBANTE MODÉLISANT UN VÉHICULE EN TROIS DIMENSIONS**

(30) Priorité: 14.04.2022 FR 2203474
(71) Demandeur: IDEMIA Identity & Security France, 92400 Courbevoie (FR)
(72) Inventeur: PERRAULT, Pierre, 92400 COURBEVOIE (FR)
(74) Mandataire: Idemia

(57) **Abrégé**

L'invention concerne un procédé de détermination par un calculateur d'une boîte englobante (b3d) modélisant un véhicule en trois dimensions, à partir d'une image comprenant ledit véhicule modélisé par une boîte rectangulaire et une voie de circulation (10), le procédé comprenant les étapes suivantes :
- une première étape de détermination dans laquelle le calculateur détermine à partir de l'image, une boîte englobante intermédiaire comprenant un point réel caractéristique (A), à partir d'une orientation de la voie de circulation, d'une bibliothèque comprenant au moins un gabarit de véhicule, et de la boîte rectangulaire, la boîte englobante intermédiaire étant associé à un gabarit sélectionné dans la bibliothèque,
- une deuxième étape de détermination dans laquelle le calculateur détermine la boîte englobante (b3d) en fonction de la boîte englobante intermédiaire (bi3d) et de la boîte rectangulaire, sans modifier le point réel caractéristique (A).

## Description

L'invention concerne le domaine de modélisations en trois dimensions d'objets d'intérêts dans des images, en particulier de véhicules dans un contexte routier, les images provenant d'un dispositif de prise de vue fixe dont le champ de vision comprend une voie de circulation.

Il est connu de l'état de la technique des modélisations en deux dimensions de véhicules dans des images. Un véhicule est modélisé par un rectangle. Ce type de modélisation ne permet pas de déterminer correctement un positionnement d'un véhicule par rapport à une ligne d'infraction ou par rapport à un autre véhicule.

Il est connu de l'état de la technique d'utiliser des réseaux de neurones pour modéliser un véhicule en trois dimensions, à partir d'une modélisation en deux dimensions dudit véhicule dans des images. Un premier problème est l'entraînement de ces réseaux de neurones. Les images disponibles pour entraîner de tels réseaux de neurones sont en grande majorité des images dont l'angle de vue n'est pas celui d'un dispositif de prise de vue fixe tel qu'un radar routier, mais plutôt des images de caméras embarquées sur des véhicules. Un deuxième problème est le temps de traitement des images qui est trop important.

L'invention vise à résoudre les problèmes susmentionnés de l'état de la technique en proposant un procédé de détermination d'une boîte englobante modélisant un véhicule en trois dimensions sans utiliser de réseaux de neurones.

L'invention porte sur un procédé de détermination par un calculateur d'une boîte englobante modélisant un véhicule en trois dimensions, à partir d'une image sélectionnée prise par un dispositif de prise de vue à un instant de temps donné et comprenant ledit véhicule et une voie de circulation, le véhicule étant modélisé dans l'image sélectionnée par une boîte rectangulaire, un point réel dans l'environnement réel du dispositif de prise de vue correspondant à un point image dans l'image sélectionnée, le calculateur disposant d'une fonction mathématique permettant de déterminer un point image à partir d'un point réel et d'une fonction mathématique inverse permettant de déterminer un point réel à partir d'un point image et d'un plan affine contenant ledit point réel, le procédé comprenant les étapes suivantes :
- une première étape de détermination dans laquelle le calculateur détermine à partir de l'image sélectionnée, une boîte englobante intermédiaire comprenant un point réel caractéristique, à partir d'une orientation de la voie de circulation, d'une bibliothèque comprenant au moins un gabarit de véhicule, et de la boîte rectangulaire, la boîte englobante intermédiaire étant associée à un gabarit sélectionné dans la bibliothèque,
- une deuxième étape de détermination dans laquelle le calculateur détermine la boîte englobante en fonction de la boîte englobante intermédiaire et de la boîte rectangulaire, sans modifier le point réel caractéristique, la boîte englobante étant associée à un gabarit final.

Selon un aspect de l'invention, le point réel caractéristique est une projection par la fonction mathématique inverse d'un point image caractéristique appartenant à la boîte rectangulaire et étant déterminé à partir de la boîte rectangulaire et de la bibliothèque, en faisant l'approximation que le point réel caractéristique est localisé dans un plan général comprenant la voie de circulation du véhicule.

Selon un aspect de l'invention, le calculateur détermine la boîte englobante en modifiant des dimensions du gabarit sélectionné en un gabarit final, de sorte à minimiser un écart entre un rectangle circonscrit à la projection dans l'image sélectionnée par la fonction mathématique de la boîte englobante et la boîte rectangulaire.

Selon un aspect de l'invention, la bibliothèque comprend un unique gabarit correspondant au gabarit sélectionné, la boîte englobante intermédiaire est un parallélépipède intermédiaire de dimensions correspondant à des dimensions de l'unique gabarit et comportant une base comprenant le point réel caractéristique, le point réel caractéristique étant déterminé de sorte que sa localisation minimise une fonction de perte faisant intervenir le parallélépipède intermédiaire et la boîte rectangulaire.

Selon un aspect de l'invention, la bibliothèque comprend une pluralité de gabarits, le calculateur déterminant pour chaque gabarit un parallélépipède intermédiaire de dimensions correspondant à des dimensions dudit gabarit et comportant une base comprenant le point réel caractéristique, le point réel caractéristique étant déterminé de sorte que sa localisation minimise une fonction de perte faisant intervenir le parallélépipède intermédiaire et la boîte rectangulaire, le calculateur sélectionnant le gabarit minimisant une deuxième fonction de perte faisant intervenir la projection dans l'image sélectionnée par la fonction mathématique du parallélépipède intermédiaire, et la boîte rectangulaire, le parallélépipède intermédiaire associé au gabarit sélectionné correspondant à la boîte englobante intermédiaire.

Selon un aspect de l'invention, le parallélépipède intermédiaire comprend un deuxième point réel et un troisième point réel localisés chacun sur une arrête dudit parallélépipède intermédiaire, la fonction de perte comprenant la somme d'une première distance entre la projection dans l'image sélectionnée par la fonction mathématique du troisième point réel et un premier côté de la boîte rectangulaire, d'une deuxième distance entre la projection dans l'image sélectionnée du deuxième point réel et un deuxième côté de la boîte rectangulaire, et de la différence entre la première distance et la deuxième distance.

Selon un aspect de l'invention, la deuxième fonction de perte comprend l'opposé de l'aire de l'intersection sur l'aire de l'union entre un rectangle intermédiaire circonscrit à la projection dans l'image sélectionnée par la fonction mathématique du parallélépipède intermédiaire et de la boîte rectangulaire.

Selon un aspect de l'invention, la voie de circulation est associée à un sens de circulation et comprend un croisement 15 avec une autre voie de circulation 18, le croisement étant délimité par une ligne de démarcation virtuelle, le procédé de détermination comprenant en outre une étape de positionnement préalable dans laquelle le calculateur détermine un positionnement amont ou aval du véhicule selon le sens de circulation par rapport à la ligne de démarcation,
le procédé de détermination comprenant si le véhicule est de positionnement amont, la première étape de détermination et de la deuxième étape de détermination,
et comprenant sinon :
   - une étape de détermination d'orientation dans laquelle le calculateur détermine une orientation du véhicule,
   - une étape de détermination historique dans laquelle le calculateur détermine à partir de l'image sélectionnée, la boîte englobante à partir de l'orientation du véhicule, d'un gabarit historique, et de la boîte rectangulaire, le gabarit historique étant déterminé à partir d'au moins un gabarit final déterminé selon la deuxième étape de détermination à partir d'une image antérieure prise par le dispositif de prise de vue à un instant de temps précédent l'instant de temps donné.

Selon un aspect de l'invention, le procédé de détermination comprend en outre une étape d'enregistrement dans laquelle le calculateur détermine un point de référence du véhicule à partir de la boîte englobante, enregistre dans une liste un positionnement amont ou aval du point de référence selon le sens de circulation par rapport à la ligne de démarcation, et dans lequel selon l'étape de positionnement, le positionnement du véhicule est déterminé aval si la liste comprend un enregistrement de positionnement aval, le positionnement du véhicule étant déterminé amont sinon.

Selon un aspect de l'invention, le vecteur directionnel a pour direction une droite passant par le point de référence antérieur de donnée temporelle la plus récente enregistré dans la liste, dit dernier point de référence, et passant par un point de référence antérieur de la liste localisé à une distance prédéterminée dudit dernier point de référence, la distance prédéterminée étant comprise entre deux et quatre mètres.

L'invention porte également sur un programme d'ordinateur comprenant les instructions de programme mettant en oeuvre les étapes du procédé de détermination, lorsque les instructions de programme sont exécutées par un ordinateur.

D'autres avantages et caractéristiques de l'invention apparaîtront à la lecture de la description et des dessins.
La figure 1a représente un véhicule dans un environnement réel et une image dudit véhicule prise par un dispositif de prise de vue.
La figure 1b représente une image comprenant un véhicule, le véhicule étant modélisé par une boîte rectangulaire.
La figure 2 représente les étapes du procédé de l'invention selon un premier algorithme.
La figure 3a représente une boîte englobante intermédiaire dans un environnement réel en trois dimensions.
La figure 3b représente une boîte rectangulaire sur une image et une projection dans l'image d'une boîte englobante intermédiaire.
La figure 4a représente une boîte rectangulaire sur une image et une projection dans l'image d'une boîte englobante.
La figure 4b représente une boîte englobante dans un environnement réel en trois dimensions.
La figure 5a représente une image comprenant trois véhicules et trois boîtes rectangulaires associées.
La figure 5b représente dans un environnement réel trois véhicules et trois boîtes englobantes associées.
La figure 6 représente les étapes du procédé de l'invention comprenant des étapes de mise en oeuvre selon un deuxième algorithme.
La figure 7 représente la détermination d'une direction d'un vecteur directionnel d'un véhicule.

L'invention porte sur un procédé de détermination par un calculateur d'une boîte englobante modélisant un véhicule V en trois dimensions, à partir d'une image sélectionnée i prise par un dispositif de prise de vue 20 à un instant de temps donné et comprenant ledit véhicule V et une voie de circulation, le véhicule V étant modélisé dans l'image sélectionnée i par une boîte rectangulaire.

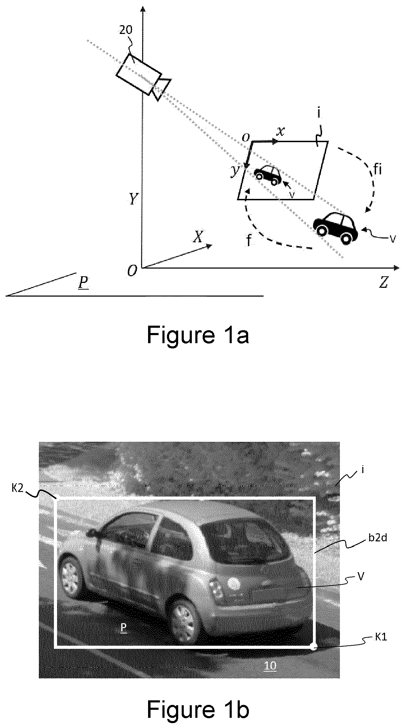

La figure 1a illustre un véhicule V dans un environnement réel d'un dispositif de prise de vue 20 et sur une image sélectionnée i prise par ledit dispositif de prise de vue 20.

Un environnement réel est un sous ensemble du monde réel en trois dimensions dans lequel des véhicules circulent sur une voie de circulation.

Le dispositif de prise de vue 20 est apte à prendre des images de véhicules circulant ou étant à l'arrêt sur une voie de circulation. Le dispositif de prise de vue 20 est monté fixe par rapport à ladite voie de circulation.

Par exemple, le dispositif de prise de vue 20 est un radar autoroutier localisé sur une route comprenant la voie de circulation, apte à détecter des infractions de vitesse du véhicule V.

Par exemple, le dispositif de prise de vue 20 est un radar de feu de circulation localisé à un croisement avec une autre voie de circulation, apte à détecter des infractions de franchissement dudit feu de circulation alors que le feu de circulation indique un arrêt obligatoire (par exemple par une couleur rouge).

Par exemple, le dispositif de prise de vue 20 est apte à prendre une séquence d'images dans le temps, notamment une vidéo, l'image sélectionnée i étant une image sélectionnée dans la séquence d'images.

L'image sélectionnée i est sélectionnée par exemple pour statuer sur une infraction de vitesse ou de franchissement de feu de circulation.

Le dispositif de prise de vue 20 est disposé en hauteur par rapport à la voie de circulation. L'environnement réel du dispositif de prise de vue 20 est repéré par un référentiel terrestre tridimensionnel dont l'origine O est avantageusement un point localisé dans un plan général P comprenant la voie de circulation.

Par exemple, l'origine O du référentiel terrestre est localisé sur une ligne d'infraction virtuelle représentant la localisation d'une mesure effectuée par une unité de contrôle associée au dispositif de prise de vue, par exemple une mesure de vitesse ou une mesure de franchissement d'un feu de circulation.

Les axes du référentiel terrestre comprennent un axe OY orienté vers le haut (vers le ciel), et deux axes OX, OZ localisés dans le plan général P. Un point dans l'environnement réel est appelé point réel et a pour coordonnées (Xi,Yi,Zi) dans le référentiel terrestre.

L'image sélectionnée i est une représentation en deux dimensions de l'environnement réel dans le champ de vision du dispositif de prise de vue 20.

Dans une image sélectionnée i acquise par le dispositif de prise de vue 20, il est défini un repère image bidimensionnel. Le repère image a par exemple pour origine un point o localisé en haut à gauche de l'image sélectionnée i et comprend deux axes d'abscisse ox horizontal et d'ordonnée oy vertical. Un point dans l'image sélectionnée i est appelé point image et a pour coordonnées (xi,yi) dans le repère image.

Le dispositif de prise de vue 20 est caractérisé par des paramètres connus ou déterminés comprenant par exemple un angle d'inclinaison transverse, une distance focale et une hauteur. A partir de ces paramètres, l'homme du métier sait définir une fonction mathématique f permettant de déterminer un point image dans l'image i à partir d'un point réel de l'environnement réel. De même, l'homme du métier sait définir une fonction mathématique inverse fi permettant de déterminer un point réel à partir d'un point image et d'un plan affine contenant ledit point réel.

Ainsi, la fonction mathématique f permet de calculer les coordonnées (xi,yi) d'un point image à partir des coordonnées d'un point réel (Xi,Yi,Zi). La fonction mathématique inverse fi permet de calculer les coordonnées d'un point réel (Xi,Yi,Zi) à partir des coordonnées (xi,yi) d'un point image et d'un plan affine comprenant ledit point réel.

Par exemple, pour des points réels localisés sur la voie de circulation, le plan affine est le plan général P.

Par exemple, dans l'environnement réel, un véhicule V modélisé par un parallélépipède de hauteur prédéterminée comprend en sa base des points réels localisés dans un plan affine qui est confondu avec le plan général P, et en la face opposée à sa base, des points réels localisés dans un plan parallèle au plan général P et situé à la distance prédéterminée dudit plan général P.

Le calculateur peut être intégré dans dispositif de prise de vue 20.

Le calculateur peut être déporté et apte à traiter des images a posteriori, par exemple dans le cadre d'une analyse ultérieure d'une infraction détectée.

Le calculateur dispose de la fonction mathématique f permettant de déterminer un point image à partir d'un point réel et de la fonction mathématique inverse fi permettant de déterminer un point réel à partir d'un point image et d'un plan affine contenant ledit point réel, un point réel dans l'environnement réel du dispositif de prise de vue 20 ayant pour image un point image dans l'image sélectionnée i.

Le calculateur est apte à déterminer une boîte englobante à partir d'une image sélectionnée i prise par un dispositif de prise de vue 20 selon un premier algorithme ou selon un deuxième algorithme.

Selon le premier algorithme, le calculateur fait l'approximation que l'orientation du véhicule V est celle de l'orientation de la voie de circulation du véhicule.

Le premier algorithme convient parfaitement lorsque l'image sélectionnée i ne comprend pas de croisement avec une autre voie de circulation.

Le premier algorithme est applicable par exemple pour un dispositif de prise de vue 20 étant un radar de vitesse sur une voie de circulation à grande vitesse, par exemple une autoroute.

Le premier algorithme est applicable par exemple pour un dispositif de prise de vue 20 étant un radar de feu de circulation localisé à un croisement, si le véhicule est positionné sur une portion de route localisée en amont du feu de circulation selon le sens de circulation de la voie de circulation. En effet, sur la portion de route amont, il est possible de faire l'approximation que l'orientation du véhicule V est sensiblement la même que l'orientation de la voie de circulation.

Après le passage du feu de circulation, ladite approximation n'est plus possible car le véhicule V est localisé sur le croisement et a la possibilité de s'engager sur une autre voie de circulation. Dans une telle situation, le calculateur détermine la boîte englobante selon le deuxième algorithme en utilisant avantageusement des résultats issus du premier algorithme sur des images antérieures dans le temps.

La figure 1b illustre une image sélectionnée i prise par le dispositif de prise de vue 20 et comprenant un véhicule V circulant sur une voie de circulation 10 définissant le plan général P.

Le véhicule V est modélisé par une boîte rectangulaire b2d générée par une technique quelconque connue de l'état de l'art.

La boîte rectangulaire b2d est par exemple définie dans l'image i par un premier point K1 et un deuxième point K2.

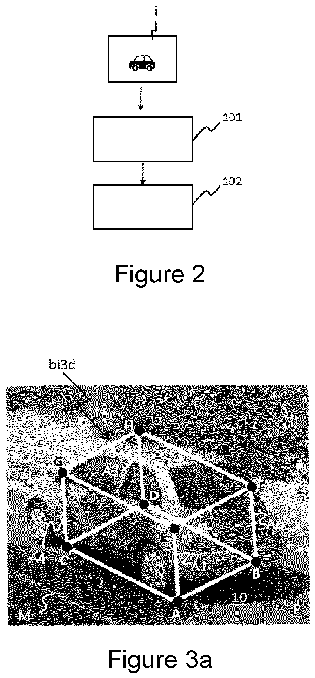

La figure 2 illustre les étapes du procédé de détermination de l'invention selon le premier algorithme.

Le procédé de détermination de l'invention comprend une première étape de détermination 101, une deuxième étape de détermination 102.

Selon la première étape de détermination 101, le calculateur détermine à partir de l'image sélectionnée i, une boîte englobante intermédiaire bi3d.

Le calculateur détermine la boîte englobante intermédiaire bi3d à partir des données suivantes:
- une orientation de la voie de circulation 10,
- une bibliothèque comprenant au moins un gabarit de véhicule,
- la boîte rectangulaire b2d.

La figure 3a illustre une boîte englobante intermédiaire bi3d dans l'environnement réel comprenant le véhicule V. La boîte englobante intermédiaire bi3d est associée à un gabarit de véhicule sélectionné dans une bibliothèque.

Un gabarit de véhicule comprend un triplet de dimensions (L,w,h) comprenant une longueur L, une largeur w et une hauteur h, par exemple en centimètres.

Par exemple, la bibliothèque comprend un gabarit de moto, un gabarit de voiture citadine et un gabarit de camion.

Par exemple, la bibliothèque comprend plusieurs gabarits de moto, plusieurs gabarits de voiture et un plusieurs gabarits de camion.

Par exemple, la bibliothèque comprend un unique gabarit de voiture citadine.

La boîte englobante intermédiaire bi3d est un parallélépipède intermédiaire ABCDEFGH dont les mesures sont associées au triplet de dimensions (L,w,h) du gabarit.

La boîte englobante intermédiaire bi3d comprend un point réel caractéristique A dont il est fait approximation qu'il est localisé dans le plan général P, c'est-à-dire sur la voie de circulation 10.

La boîte englobante intermédiaire bi3d comprend une première face qui est la base du parallélépipède intermédiaire et dont les sommets comprennent, dans le sens trigonométrique conventionnel, le point réel caractéristique A, un deuxième point réel B, un quatrième point réel D et un troisième point réel C. Il est fait approximation que la première face est localisée dans le plan général P.

Opposée et parallèle à la première face, la boîte englobante intermédiaire bi3d comprend une deuxième face dont les sommets comprennent, dans le sens trigonométrique conventionnel, un cinquième point réel E, un sixième point réel F, un huitième point réel H et un septième point réel G.

La boîte englobante intermédiaire bi3d comprend quatre arrêtes de dimension la hauteur h du triplet de dimensions (L,w,h) du gabarit, reliant la première face et la deuxième face :
- une première arrête A1 définie par le point réel caractéristique A et le cinquième point réel E,
- une deuxième arrête A2 définie par le deuxième point réel B et le sixième point réel F,
- une troisième arrête A3 définie par le quatrième point réel D et le huitième point réel H,
- une quatrième arrête A4 définie par le troisième point réel C et le septième point réel G.

La boîte englobante intermédiaire bi3d est avantageusement orientée selon la même orientation que la voie de circulation 10.

Par exemple, deux des côtés de la première face et deux des côtés de la deuxième face sont parallèles à un marquage M de délimitation de la voie de circulation 10.

En particulier, il s'agit pour la boîte englobante intermédiaire bi3d, des arrêtes suivantes, dont la dimension correspond à la longueur L du triplet de dimensions (L,w,h) du gabarit :
- l'arrête définie par le point réel caractéristique A et le troisième point réel C,
- l'arrête définie par le deuxième point réel B et le quatrième point réel D,
- l'arrête définie par le cinquième point réel E et le septième point réel G,
- l'arrête définie par le sixième point réel F et le huitième point réel H.

Les arrêtes de la boîte englobante intermédiaire bi3d qui sont associées à la largeur w du triplet de dimensions (L,w,h) du gabarit sont :
- l'arrête définie par le point réel caractéristique A et le deuxième point réel B,
- l'arrête définie par le troisième point réel C et le quatrième point réel D,
- l'arrête définie par le cinquième point réel E et le sixième point réel F,
- l'arrête définie par le septième point réel G et le huitième point réel H.

Pour déterminer la boîte englobante intermédiaire bi3d dans l'environnement réel de la figure 3a, le calculateur travaille avantageusement dans le repère image, sur l'image sélectionnée i.

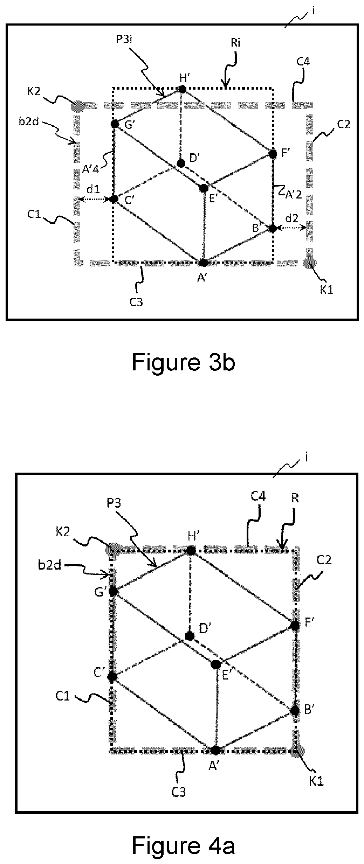

Sur la figure 3b, la boîte rectangulaire b2d de l'image i de la figure 1b est superposée à une projection P3i dans l'image i par la fonction mathématique f de la boîte englobante intermédiaire bi3d.

La figure 3b illustre également un rectangle intermédiaire Ri circonscrit à la projection dans l'image i par la fonction mathématique f de la boîte englobante intermédiaire bi3d.

La boîte rectangulaire b2d comporte un premier côté C1 correspondant à un côté gauche, un deuxième côté C2 correspondant à un côté droit, un troisième côté correspondant à un côté bas C3, un quatrième côté correspondant à un côté haut C4.

Le premier point K1 est un sommet localisé à droite et en bas de la boîte rectangulaire b2d et qui correspond à l'intersection entre le troisième côté C3 et le deuxième côté C2.

Le deuxième point K2 est un sommet localisé en haut et à gauche de la boîte rectangulaire b2d et qui correspond à l'intersection entre le premier côté C1 et le quatrième côté C4.

Une projection P3i dans l'image i par la fonction mathématique f de la boîte englobante intermédiaire bi3d (et donc du parallélépipède intermédiaire ABCDEFGH) est un parallélépipède intermédiaire image A'B'C'D'E'F'G'H'.

Le parallélépipède intermédiaire image A'B'C'D'E'F'G'H' comprend le point image caractéristique A' qui est la projection du point réel caractéristique A par ladite fonction mathématique f.

Pour modéliser au mieux le véhicule V à partir du gabarit de véhicule, le calculateur détermine le point réel caractéristique A telle point image caractéristique A' appartient à la boîte rectangulaire b2d.

En outre, le point réel caractéristique A est déterminé à partir de la boîte rectangulaire b2d et de la bibliothèque en faisant l'approximation que le point réel caractéristique A est localisé sur un plan général P comprenant la voie de circulation du véhicule V.

Par exemple, le point réel caractéristique A est déterminé de sorte que sa localisation minimise une fonction de perte faisant intervenir le parallélépipède intermédiaire ABCDEFGH et la boîte englobante intermédiaire b2d.

Avantageusement, le calculateur positionne le parallélépipède intermédiaire image A'B'C'D'E'F'G'H' sur l'image sélectionnée i de manière à ce que le point image caractéristique A' est localisé sur le troisième côté de la boîte rectangulaire b2d et minimise la fonction de perte faisant intervenir le parallélépipède intermédiaire (en particulier sa projection P3i dans l'image i) et la boîte englobante intermédiaire b2d.

Par exemple, la fonction de perte comprend une somme de :
- une première distance d1 entre la projection dans l'image sélectionnée i par la fonction mathématique f de la quatrième arrête A4, dite quatrième arrête image A'4, et le premier côté C1 de la boîte rectangulaire b2d,
- une deuxième distance d2 entre la projection dans l'image sélectionnée i par la fonction mathématique f de la deuxième arrête A2, dite deuxième arrête image A'2, et le deuxième côté C2 de la boîte rectangulaire b2d,
- une différence entre la première distance d1 et la deuxième distance d2, en particulier la valeur absolue de cette différence.

Par exemple, la première distance d1 est déterminée entre la projection dans l'image i du troisième point réel C, dit troisième point image C', et le premier côté C1 de la boîte rectangulaire b2d.

Par exemple, la première distance d1 est déterminée entre la projection dans l'image i du septième point réel G, dit septième point image G', et le premier côté C1 de la boîte rectangulaire b2d.

Par exemple, la deuxième distance d2 est déterminée entre la projection dans l'image i du deuxième point réel B, dit deuxième point image B', et le deuxième côté C2 de la boîte rectangulaire b2d.

Par exemple, la deuxième distance d2 est déterminée entre la projection dans l'image i du sixième point réel F, dit sixième point image F', et le deuxième côté C2 de la boîte rectangulaire b2d.

L'orientation de la boîte englobante intermédiaire bi3d est fonction de l'orientation de la voie de circulation 10.

Par exemple, l'orientation de la boîte englobante intermédiaire bi3d est l'orientation de la voie, en l'emplacement du véhicule V sur ladite voie de circulation.

La boîte englobante intermédiaire bi3d est associée à un gabarit sélectionné dans la bibliothèque. Cela signifie que ses dimensions sont celles du gabarit sélectionné.

Par exemple, la bibliothèque comprend un unique gabarit. Le gabarit sélectionné est l'unique gabarit.

Par exemple, la bibliothèque comprend une pluralité de gabarits. Le gabarit sélectionné est celui qui correspond le mieux à la boîte rectangulaire b2d.

Pour sélectionner le gabarit qui correspond le mieux, le calculateur traite la bibliothèque comprenant une pluralité de gabarits comme une pluralité de bibliothèques d'un unique gabarit, c'est-à-dire que le calculateur détermine une pluralité parallélépipèdes intermédiaires associée à la pluralité de gabarits.

Puis, le calculateur sélectionne parmi la pluralité de bibliothèques d'un unique gabarit, la bibliothèque d'un unique gabarit minimisant une deuxième fonction de perte faisant intervenir la projection dans l'image sélectionnée i par la fonction mathématique f du parallélépipède intermédiaire et la boîte rectangulaire b2d.

Le calculateur sélectionne ainsi le gabarit minimisant ladite deuxième fonction de perte, le parallélépipède intermédiaire associé au gabarit sélectionné correspondant à la boîte englobante intermédiaire bi3d

Par exemple, la deuxième fonction de perte comprend l'opposé de l'aire de l'intersection sur l'aire de l'union entre le rectangle intermédiaire Ri circonscrit à la projection dans l'image sélectionnée i par la fonction mathématique f du parallélépipède intermédiaire, et de la boîte rectangulaire b2d.

La figure 3b illustre un exemple de rectangle intermédiaire Ri.

La boîte englobante intermédiaire bi3d et le rectangle intermédiaire Ri correspondant, ainsi que le parallélépipède intermédiaire ABCDEFGH correspondant sont qualifiés d'intermédiaire parce qu'ils sont le résultat d'une étape intermédiaire du procédé de l'invention et sont destinés à être modifiés.

En effet, comme illustré sur les figures 3a et 3b, utiliser un gabarit de véhicule issu d'une bibliothèque ne permet souvent pas de déterminer une boîte englobante qui modélise parfaitement le véhicule V. En effet, le gabarit de véhicule est associé à un triplet de dimensions (L,w,h) prédéfini qui ne correspond probablement pas aux dimensions réelles du véhicule V.

Ainsi, selon la deuxième étape de détermination 102, la boîte englobante intermédiaire bi3d, qui est associée à un gabarit de véhicule issu de la bibliothèque, est avantageusement modifiée par le calculateur en une boîte englobante b3d associé à un gabarit final, par modification dudit gabarit de véhicule issu de la bibliothèque en ledit gabarit final, sans modifier le point réel caractéristique A, ni par conséquence le point image caractéristique A'.

Le calculateur détermine la boîte englobante b3d en fonction de la boîte englobante intermédiaire bi3d et de la boîte rectangulaire b2d, sans modifier le point réel caractéristique A, ni par conséquent le point image caractéristique A', la boîte englobante b3d étant associée à un gabarit final.

Par exemple, comme illustré sur la figure 4a, la boîte englobante b3d de l'image est déterminée en modifiant les dimensions du gabarit sélectionné dans la bibliothèque, de sorte à minimiser un écart entre un rectangle R circonscrit à la projection dans l'image i par la fonction mathématique f de la boîte englobante b3d et la boîte rectangulaire b2d, le point image caractéristique A' restant fixe.

Une modification des dimensions du gabarit sélectionné revient à une modification du triplet de dimensions (L,w,h) correspondant.

La boîte englobante intermédiaire bi3d est un parallélépipède intermédiaire ABCDEFGH dont les mesures sont associées au triplet de dimensions (L,w,h) du gabarit.

Modifier les dimensions du gabarit revient à modifier le triplet de dimensions (L,w,h) et donc à déplacer par exemple :
- le deuxième point réel B pour que sa projection dans l'image sélectionnée (deuxième point image B') appartienne au deuxième côté C2 de la boîte rectangulaire b2d,
- le troisième point réel C pour que sa projection dans l'image sélectionnée (troisième point image C') appartienne au premier côté C1 de la boîte rectangulaire b2d,
- le huitième point réel H pour que sa projection dans l'image sélectionnée (huitième point image H') appartienne au quatrième côté C4 de la boîte rectangulaire b2d.

Par exemple, suite à la modification, le rectangle R et la boîte rectangulaire b2d coïncide.

Par exemple, suite à la modification, le rectangle R contient ou englobe la boîte rectangulaire b2d de sorte que le troisième point image C' et le deuxième point image B' sont localisés sur la boîte englobante rectangulaire b2d, la projection dans l'image i du le point huitième point réel H, dit huitième point image H', pouvant ne pas être localisé sur sur la boîte englobante rectangulaire b2d.

Sur la figure 4a, suite à ladite modification, la boîte rectangulaire b2d coïncide avec le rectangle R circonscrit à une projection P3 dans l'image sélectionnée i par la fonction mathématique f de la boîte englobante b3d.

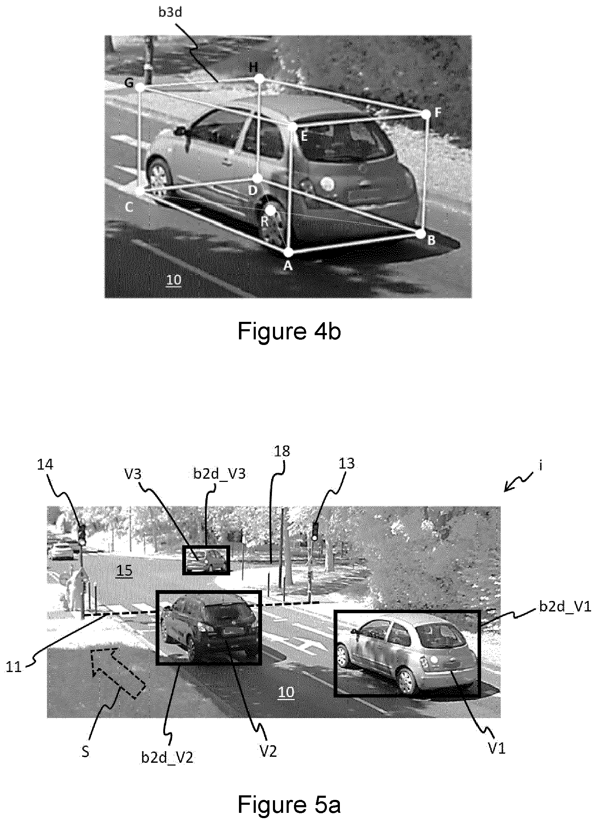

La figure 4b illustre la boîte englobante b3d déterminée en figure 4a, dans l'environnement réel comprenant le véhicule V.

Dans un but de simplification des références, le parallélépipède ABCDEFGH et le parallélépipède intermédiaire ABCDEFGH sont référencés avec les mêmes points A, B, C, D, E, F, G, H sur les figures 3a, 4b, qu'ils soient associés à la boîte englobante intermédiaire bi3d ou à la boîte englobante b3d car ils correspondent à un parallélépipède ancré en le même point réel caractéristique A, de même orientation, dont seules les dimensions diffèrent.

De la même manière, le parallélépipède intermédiaire image A'B'C'D'E'F'G'H' et le parallélépipède image A'B'C'D'E'F'G'H' sont référencés avec les mêmes points A', B', C', D', E', F', G', H' sur les figures 3b, 4a, qu'ils soient associés dans l'image à la boîte englobante intermédiaire bi3d ou à la boîte englobante b3d car ils correspondent à un parallélépipède image ancré en le même point image caractéristique A', de même orientation, dont seules les dimensions diffèrent.

Comme illustré sur la figure 4b au travers de la boîte englobante b3d, le gabarit final, issu de la modification du gabarit de véhicule de la bibliothèque, correspond beaucoup mieux aux dimensions réelles du véhicule V que le gabarit issu de la bibliothèque.

Dans un contexte routier de croisement, le calculateur détermine la boîte englobante b3d selon le premier algorithme tant que le véhicule n'est pas engagé dans le croisement, sinon, le calculateur détermine la boîte englobante b3d selon le deuxième algorithme. Il est donc nécessaire pour le calculateur de localiser le véhicule V par rapport au croisement.

Pour localiser le véhicule V par rapport à un croisement, le calculateur détermine avantageusement un point de référence R appartenant à la boîte englobante b3d.

Le point de référence R peut être localisé en différents endroits de la boîte englobante b3d, pourvu que la localisation soit fixe pour un véhicule prédéterminé à chaque mise en ouvres du procédé.

Par exemple, le point de référence R est le centre de la boîte englobante b3d.

Par exemple, comme illustré sur la figure 4b, le point de référence R est le centre de la première face de la boîte englobante b3d.

Par exemple, le point de référence R est le milieu de l'arrête définie par le troisième point réel C et le quatrième point réel D.

Par exemple, le point de référence R est le milieu de l'arrête définie par le point réel caractéristique A et le deuxième point réel B.

La figure 5a représente une image sélectionnée i comprenant :
- un premier véhicule V1 modélisé par une première boîte rectangulaire b2d_V1,
- un deuxième véhicule V2 modélisé par une deuxième boîte rectangulaire b2d_V2,
- un troisième véhicule V3 modélisé par une troisième boîte rectangulaire b2d_V3.

L'image sélectionnée i comprend une voie de circulation 10 de sens de circulation S sur laquelle circulent les premier et deuxième véhicules V1, V2 et un croisement 15 avec une autre voie de circulation 18 sur laquelle s'engage le troisième véhicule V3.

Le croisement 15 comprend deux feux de circulation 13, 14 associés à la voie de circulation 10.

Pour localiser le véhicule V1, V2, V3 par rapport à un croisement 15, le croisement 15 est par exemple délimité par une ligne de démarcation 11 virtuelle.

La ligne de démarcation virtuelle 11 correspond avantageusement à une ligne d'infraction représentant la localisation d'une mesure effectuée par une unité de contrôle associée au dispositif de prise de vue, par exemple une mesure de vitesse ou une mesure de franchissement d'un feu de circulation l'endroit en lequel est mesurée une infraction.

Par exemple la ligne de démarcation 11 est une ligne passant par deux feux de circulation 13, 14 localisés de part et d'autre de la voie de circulation 10, comme illustré sur la figure 5a.

Par exemple la ligne de démarcation 11 est une ligne perpendiculaire à la voie de circulation et passant au moins un feu de circulation 13, 14.

Par exemple la ligne de démarcation 11 est une ligne perpendiculaire à la voie de circulation et localisée à une distance prédéfinie de l'autre voie de circulation 18.

Pour localiser le véhicule V1, V2, V3 par rapport à la ligne de démarcation 11 virtuelle, un véhicule V1, V2, V3 est localisé selon un positionnement amont ou aval du véhicule V1, V2, V3 par rapport à la ligne de démarcation 11, selon le sens de circulation S associé à la voie de circulation 10.

Pour modéliser avec une boîte englobante b3d un véhicule V1, V2 localisé en amont de la ligne de démarcation 11, le calculateur utilise le premier algorithme basé sur l'orientation de la voie de circulation 10 et la bibliothèque telle que décrit précédemment.

Lorsque le véhicule V3 est localisé en aval de la ligne de démarcation 11, le véhicule peut ne plus être orienté comme la voie de circulation 10. Par exemple dans le cas d'un changement de voie de circulation, le véhicule V3 s'oriente progressivement en direction d'une autre voie de circulation. Dans ce cas, le calculateur utilise le deuxième algorithme pour modéliser le véhicule V3.

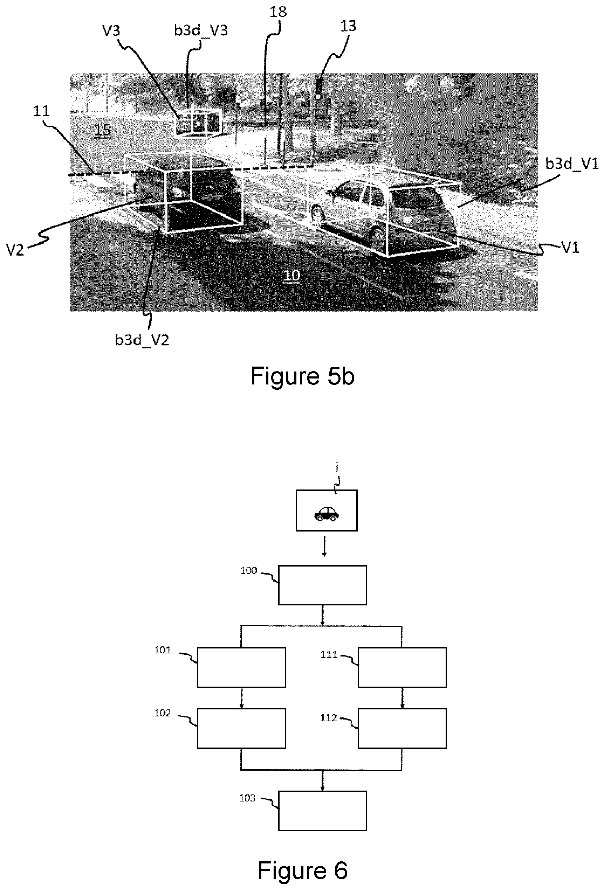

La figure 5b illustre dans l'environnement réel les trois véhicules de la figure 5a modélisés par trois boîtes englobantes :
- une première boîte englobante b3d_V1 associée au premier véhicule V1,
- une deuxième boîte englobante b3d_V2 associée au deuxième véhicule V2,
- une troisième boîte englobante b3d_V3 associée au troisième véhicule V3,
la première boîte englobante b3d_V1 et la deuxième boîte englobante b3d_V1 ayant été déterminées selon le premier algorithme, la troisième boîte englobante b3d_V3 ayant été déterminée selon le deuxième algorithme.

La figure 6 illustre les étapes du procédé de l'invention dans un contexte routier comprenant croisement avec une autre voie de circulation, selon le premier algorithme ou selon le deuxième algorithme.

Dans un contexte routier de croisement, le calculateur dispose avantageusement d'une multitude d'images prise par le dispositif de prise de vue 20, par exemple issues d'une vidéo.

Ainsi, lors de la mise en oeuvre du procédé de l'invention à partir d'une image sélectionnée i prise par le dispositif de prise de vue 20 à un instant de temps donné, le calculateur dispose, sauf à la première mise en oeuvre, d'une pluralité d'images antérieures prises par le dispositif de prise de vue 20 à différents instants dans le temps précédent l'instant de temps donné, et des résultats associés.

Pour une meilleure distinction de ce qui est relatif aux images antérieures et à l'image sélectionnée i, le qualificatif « antérieur » est ajouté ci-après aux objets déterminés à partir d'une image antérieure.

En plus des étapes pour déterminer la boîte englobante b3d en relation avec le premier et le deuxième algorithme, le procédé de l'invention dans un contexte routier de croisement, comprend une étape de positionnement 100 préalable et une étape d'enregistrement 103 postérieure.

Selon l'étape de positionnement 100, le calculateur détermine un positionnement amont ou aval du véhicule V selon le sens de circulation S par rapport à la ligne de démarcation 11.

L'étape de positionnement 100 permet au calculateur de savoir quel algorithme appliquer.

Par exemple, le calculateur, détecte une roue avant du véhicule V et détermine le positionnement amont ou aval du véhicule V en fonction de la position de ladite roue par rapport à la ligne de démarcation virtuelle 11.

Par exemple, le calculateur détermine le positionnement d'un véhicule V dans une image sélectionnée i en fonction d'un positionnement amont ou aval d'un point de référence associé au véhicule V dans une image antérieure.

Pour déterminer la boîte englobante b3d, le procédé de détermination comprend les étapes suivantes :
- si le véhicule V est de positionnement amont : la première étape de détermination 101 et de la deuxième étape de détermination 102, selon premier algorithme,
- si le véhicule V est de positionnement aval : une étape de détermination d'orientation 111 et une étape de détermination historique 112, selon le deuxième algorithme.

Selon l'étape de détermination d'orientation 111, le calculateur détermine une orientation du véhicule V.

Par exemple, le calculateur, détecte dans l'image sélectionnée i un bas de caisse du véhicule V et détermine l'orientation du véhicule V en fonction d'une orientation dudit bas de caisse.

Par exemple, le calculateur détermine l'orientation du véhicule en fonction d'une trajectoire passée, d'un vecteur directeur ou d'un vecteur vitesse du véhicule V.

Selon l'étape de détermination historique 112, le calculateur détermine à partir de l'image sélectionnée i, la boîte englobante b3d à partir de l'orientation du véhicule V, d'un gabarit historique, et de la boîte rectangulaire b2d.

Le gabarit historique est déterminé à partir d'au moins un gabarit final antérieur.

Un gabarit final antérieur est un gabarit final associé au véhicule V et déterminé pour une image antérieure selon les première et deuxième étapes de détermination 101, 102, c'est-à-dire selon le premier algorithme.

Par exemple, le gabarit historique est une moyenne de plusieurs gabarits finaux antérieurs.

Par exemple, le gabarit historique est une moyenne de tous les gabarits finaux antérieurs.

Comme pour le premier algorithme, la boîte englobante b3d comprend un point réel caractéristique A.

Le point réel caractéristique A est une projection par la fonction mathématique inverse fi d'un point image caractéristique A' appartenant à la boîte rectangulaire b2d et est déterminé à partir de la boîte rectangulaire b2d et du gabarit historique, en faisant l'approximation que le point réel caractéristique A est localisé sur un plan général P comprenant la voie de circulation du véhicule V.

Ainsi, l'étape de détermination historique 112 selon le deuxième algorithme est similaire à la première étape de détermination 101 selon le premier algorithme, le gabarit historique étant utilisé à la place du gabarit sélectionné, l'orientation de véhicule étant utilisée à la place de l'orientation de la voie de circulation.

Ce qui a été décrit précédemment en relation avec première étape de détermination 101 est ainsi transposable l'étape de détermination historique 112.

Suite à la détermination de la boîte englobante b3d selon le premier algorithme ou le deuxième algorithme, le procédé de l'invention comprend l'étape d'enregistrement 103.

L'étape d'enregistrement 103 comprend :
- la détermination d'un point de référence R du véhicule V à partir de la boîte englobante b3d, comme illustré et décrit en relation avec la figure 4b,
- la détermination d'un positionnement amont ou aval du point de référence R par rapport à la ligne de démarcation 11 et selon le sens de circulation S,
- l'enregistrement dans une liste d'une localisation du point de référence R, de préférence en association avec une donnée temporelle associée l'instant de temps donné de la prise de vue de l'image sélectionnée i.

Suite à une mise en oeuvre du procédé de l'invention par le calculateur pour une pluralité d'images antérieures, la liste comprend un historique de localisation du point de référence R associé au véhicule V pour chaque image antérieure.

Par exemple, la localisation du point de référence comprend une position dans le référentiel terrestre. La liste permet alors de déterminer la trajectoire passée du véhicule V et d'en déduire une orientation du véhicule V estimée à un instant de temps donné pour une image sélectionnée i, par exemple en fonction d'un vecteur directionnel.

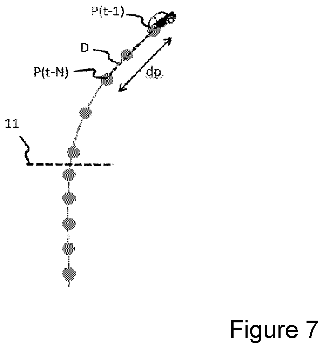

Par exemple, comme représenté sur la figure 7, le vecteur directionnel du véhicule V pour une image sélectionnée i prise à un instant de temps donné, a pour direction une droite D passant par le point de référence antérieur de donnée temporelle la plus récente P(t-1) enregistré dans la liste, dit dernier point de référence, et passant par un point de référence antérieur de la liste plus ancien P(t-N) localisé à une distance prédéterminée dp dudit dernier point de référence, la distance prédéterminée dp étant comprise entre deux et quatre mètres.

Déterminer un vecteur directionnel à partir d'une distance prédéterminée dp plutôt qu'un vecteur vitesse permet au calculateur de déterminer une orientation du véhicule même dans le cas où le véhicule V s'est arrêté au niveau du croisement, par exemple pour attendre le changement de couleur d'un feu de circulation.

On remarque sur la figure 7 qu'avant la ligne de démarcation 11 virtuelle, les points de référence antérieurs sont alignés et qu'après la ligne de démarcation 11 virtuelle, les points de référence antérieurs suivent une ligne courbe, le véhicule effectuant un changement de voie de circulation.

Par exemple, la localisation du point de référence comprend un positionnement amont ou aval. La liste permet alors de déterminer un positionnement amont ou aval du véhicule V selon le sens de circulation S par rapport à la ligne de démarcation 11 à un instant de temps donné pour une image sélectionnée i.

La liste permet alors de déterminer un positionnement amont ou aval du véhicule V donné selon le sens de circulation S par rapport à la ligne de démarcation 11, en fonction d'un positionnement amont ou aval d'un point de référence antérieur.

Un exemple d'utilisation de la liste issue de l'étape d'enregistrement 103 est donné ci-dessous.

Selon l'étape de positionnement 100, le calculateur détermine un positionnement aval du véhicule V si dans la liste au moins un point de référence antérieur associé au véhicule V est de positionnement aval. Sinon, le calculateur détermine un positionnement amont du véhicule V.

Selon l'étape de détermination d'orientation 111, le calculateur détermine l'orientation du véhicule tel que représenté figure 7, en fonction d'un vecteur directionnel dont la direction est une droite D passant par le point de référence antérieur de donnée temporelle la plus récente P(t-1) enregistré dans la liste, dit dernier point de référence, et passant par un point de référence antérieur de la liste plus ancien P(t-N) localisé à une distance prédéterminée dp dudit dernier point de référence, la distance prédéterminée dp étant comprise entre deux et quatre mètres.

Une illustration est faite ci-après selon le scénario suivant. Le dispositif de prise de vue 20 filme un véhicule V circulant sur une voie de circulation 10. Le véhicule V entre dans le champ de vision du dispositif de prise de vue 20. Le véhicule V circule sur la voie de circulation 10 jusqu'à une ligne de démarcation 11 d'un croisement 15, puis change de direction sur le croisement 15 pour se diriger vers une autre voie de circulation 18.

Le calculateur dispose d'images prises par le dispositif de prise de vue 20 à différents instants dans le temps depuis l'apparition du véhicule V dans le champ de vision du dispositif de prise de vus 20 jusqu'à sa disparition dudit champ de vision.

Sur la première image sélectionnée i, le véhicule V est détecté pour la première fois par le calculateur. La liste associée au véhicule V est vide.

Selon l'étape de positionnement 100, la liste ne comprend pas un point de référence antérieur de positionnement aval, puisqu'elle est vide. Le calculateur détermine un positionnement amont du véhicule V.

Le calculateur détermine une boîte englobante b3d associée à un gabarit final selon le premier algorithme.

Selon l'étape d'enregistrement 103, le calculateur détermine et enregistre dans la liste un premier point de référence R. L'enregistrement comprend une position du point de référence dans le référentiel terrestre, une heure correspondant à l'instant de temps donné de la première image sélectionnée i et un positionnement amont.

Sur les images suivantes sélectionnées, le véhicule V n'a pas encore franchi le croisement 15.

A chaque mise en oeuvre du procédé de l'invention à partir de ces images suivantes sélectionnées, un point de référence R est déterminé et enregistré dans la liste selon l'étape d'enregistrement 103. Tous les points de référence de la liste sont de positionnement amont.

Le calculateur détermine pour chaque image suivante sélectionnée une boîte englobante b3d associée à un gabarit final selon le premier algorithme.

Le franchissement du véhicule du croisement est déterminé au moment où le point de référence R déterminé est de positionnement aval.

L'image sélectionnée i correspondante est dite image sélectionnée de franchissement. L'instant de temps donné est dit instant de franchissement.

Pour l'image sélectionnée de franchissement, la liste ne comprend pas un point de référence antérieur de positionnement aval selon l'étape de positionnement 100. Le calculateur détermine un positionnement amont du véhicule V.

Le calculateur détermine une boîte englobante b3d associée à un gabarit final selon le premier algorithme.

Selon l'étape d'enregistrement 103, le calculateur détermine et enregistre dans la liste un nouveau point de référence. Le nouveau point de référence est déterminé de positionnement aval car localisé en aval de la ligne de démarcation 11. La liste comprend une pluralité de points de référence R de positionnement amont et un premier point de référence de positionnement aval correspondant audit nouveau point de référence.

Sur les images sélectionnées à un instant de temps postérieur à l'instant de franchissement, le véhicule V a franchi le croisement 15.

Pour ces images sélectionnées, selon l'étape de positionnement 100, la liste comprend au moins un point de référence antérieur de positionnement aval, celui déterminé lors de la mise en oeuvre du procédé à partir de l'image sélectionnée de franchissement. Le calculateur détermine donc un positionnement aval du véhicule V.

Le calculateur détermine une boîte englobante b3d associée à un gabarit historique et une orientation de véhicule, selon le deuxième algorithme.

La gabarit historique est par exemple une moyenne de tous les gabarits finaux déterminés à partir des images sélectionnées avant que le véhicule V n'ait franchi le croisement 15, selon le premier algorithme donc.

L'orientation du véhicule est déterminée en fonction d'un vecteur directionnel dont la direction est une droite D passant par le point de référence antérieur de donnée temporelle la plus récente P(t-1) enregistré dans la liste, dit dernier point de référence, et passant par un point de référence antérieur de la liste plus ancien P(t-N) localisé à une distance de par exemple trois mètres dudit dernier point de référence.

Selon l'étape d'enregistrement 103, le calculateur détermine et enregistre dans la liste pour chaque image sélectionnée i, le point de référence R associé pour pouvoir déterminer à chaque mise en oeuvre du procédé de l'invention un vecteur directionnel actualisé.

## Revendications

1. Procédé de détermination par un calculateur d'une boîte englobante (b3d) modélisant un véhicule (V) en trois dimensions, à partir d'une image sélectionnée (i) prise par un dispositif de prise de vue (20) à un instant de temps donné et comprenant ledit véhicule (V) et une voie de circulation (10), le véhicule (V) étant modélisé dans l'image sélectionnée (i) par une boîte rectangulaire (b2d), un point réel dans l'environnement réel du dispositif de prise de vue (20) correspondant à un point image dans l'image sélectionnée (i), le calculateur disposant d'une fonction mathématique (f) permettant de déterminer un point image à partir d'un point réel et d'une fonction mathématique inverse (fi) permettant de déterminer un point réel à partir d'un point image et d'un plan affine contenant ledit point réel, le procédé comprenant les étapes suivantes :
- une première étape de détermination (101) dans laquelle le calculateur détermine à partir de l'image sélectionnée (i), une boîte englobante intermédiaire (bi3d) comprenant un point réel caractéristique (A), à partir d'une orientation de la voie de circulation, d'une bibliothèque comprenant au moins un gabarit de véhicule, et de la boîte rectangulaire (b2d), la boîte englobante intermédiaire (bi3d) étant associée à un gabarit sélectionné dans la bibliothèque,
- une deuxième étape de détermination (102) dans laquelle le calculateur détermine la boîte englobante (b3d) en fonction de la boîte englobante intermédiaire (bi3d) et de la boîte rectangulaire (b2d), sans modifier le point réel caractéristique (A), la boîte englobante (b3d) étant associée à un gabarit final.

2. Procédé de détermination selon la revendication précédente, le point réel caractéristique (A) étant une projection par la fonction mathématique inverse (fi) d'un point image caractéristique (A') appartenant à la boîte rectangulaire (b2d) et étant déterminé à partir de la boîte rectangulaire (b2d) et de la bibliothèque, en faisant l'approximation que le point réel caractéristique (A) est localisé dans un plan général (P) comprenant la voie de circulation du véhicule (V).

3. Procédé de détermination selon l'une quelconque des revendications 1 à 2, le calculateur déterminant la boîte englobante (b3d) en modifiant des dimensions du gabarit sélectionné en un gabarit final, de sorte à minimiser un écart entre un rectangle (R) circonscrit à la projection dans l'image sélectionnée (i) par la fonction mathématique (f) de la boîte englobante (b3d) et la boîte rectangulaire (b2d).

4. Procédé de détermination selon l'une quelconque des revendications précédentes, la bibliothèque comprenant un unique gabarit correspondant au gabarit sélectionné, la boîte englobante intermédiaire (bi3d) étant un parallélépipède intermédiaire de dimensions correspondant à des dimensions de l'unique gabarit et comportant une base comprenant le point réel caractéristique (A), le point réel caractéristique (A) étant déterminé de sorte que sa localisation minimise une fonction de perte faisant intervenir le parallélépipède intermédiaire et la boîte rectangulaire (b2d).

5. Procédé de détermination selon l'une quelconque des revendications 1 à 3, la bibliothèque comprenant une pluralité de gabarits, le calculateur déterminant pour chaque gabarit un parallélépipède intermédiaire de dimensions correspondant à des dimensions dudit gabarit et comportant une base comprenant le point réel caractéristique (A), le point réel caractéristique (A) étant déterminé de sorte que sa localisation minimise une fonction de perte faisant intervenir le parallélépipède intermédiaire et la boîte rectangulaire (b2d), le calculateur sélectionnant le gabarit minimisant une deuxième fonction de perte faisant intervenir la projection dans l'image sélectionnée (i) par la fonction mathématique (f) du parallélépipède intermédiaire, et la boîte rectangulaire (b2d), le parallélépipède intermédiaire associé au gabarit sélectionné correspondant à la boîte englobante intermédiaire (bi3d).

6. Procédé de détermination selon l'une quelconque des revendications 4 et 5, le parallélépipède intermédiaire comprenant un deuxième point réel (B) et un troisième point réel (C) localisés chacun sur une arrête dudit parallélépipède intermédiaire, la fonction de perte comprenant la somme d'une première distance (d1) entre la projection dans l'image sélectionnée (i) par la fonction mathématique (f) du troisième point réel (C) et un premier côté de la boîte rectangulaire (b2d), d'une deuxième distance (d2) entre la projection dans l'image sélectionnée (i) du deuxième point réel (B) et un deuxième côté de la boîte rectangulaire (b2d), et de la différence entre la première distance (d1) et la deuxième distance (d2).

7. Procédé de détermination selon la revendication 6 lorsqu'elle dépend de la revendication 5 ou selon la revendication 5, la deuxième fonction de perte comprenant l'opposé de l'aire de l'intersection sur l'aire de l'union entre un rectangle intermédiaire (Ri) circonscrit à la projection dans l'image sélectionnée (i) par la fonction mathématique (f) du parallélépipède intermédiaire et de la boîte rectangulaire (b2d).

8. Procédé de détermination selon l'une quelconque des revendications précédentes, la voie de circulation étant associée à un sens de circulation (S) et comprenant un croisement (15) avec une autre voie de circulation (18), le croisement (15) étant délimité par une ligne de démarcation (11) virtuelle, le procédé de détermination comprenant en outre une étape de positionnement (100) préalable dans laquelle le calculateur détermine un positionnement amont ou aval du véhicule (V) selon le sens de circulation (S) par rapport à la ligne de démarcation (11),
le procédé de détermination comprenant, si le véhicule (V) est de positionnement amont, la première étape de détermination (101) et de la deuxième étape de détermination (102),
et comprenant sinon :
- une étape de détermination d'orientation (111) dans laquelle le calculateur détermine une orientation du véhicule (V),
- une étape de détermination historique (112) dans laquelle le calculateur détermine à partir de l'image sélectionnée (i), la boîte englobante (b3d) à partir de l'orientation du véhicule (V), d'un gabarit historique, et de la boîte rectangulaire (b2d), le gabarit historique étant déterminé à partir d'au moins un gabarit final déterminé selon la deuxième étape de détermination (102) à partir d'une image antérieure prise par le dispositif de prise de vue (20) à un instant de temps précédent l'instant de temps donné.

9. Procédé de détermination selon la revendication précédente, comprenant en outre une étape d'enregistrement (103) dans laquelle le calculateur détermine un point de référence (R) du véhicule (V) à partir de la boîte englobante (b3d), enregistre dans une liste un positionnement amont ou aval du point de référence (R) selon le sens de circulation (S) par rapport à la ligne de démarcation (11), et dans lequel selon l'étape de positionnement (100), le positionnement du véhicule (V) est déterminé aval si la liste comprend un enregistrement de positionnement aval, le positionnement du véhicule (V) étant déterminé amont sinon.

10. Produit programme d'ordinateur comprenant les instructions de programme mettant en oeuvre les étapes du procédé de détermination selon l'une quelconque des revendications 1 à 9, lorsque les instructions de programme sont exécutées par un ordinateur.
